# EUROPÄISCHE PATENTSCHRIFT

(11) **EP 1 074 758 B1**
(45) Veröffentlichungstag und Bekanntmachung des Hinweises auf die Patenterteilung: **28.07.2004**
(21) Anmeldenummer: 00111208.5
(22) Anmeldetag: 24.05.2000
(51) Int. Cl.: F16D 69/04, F16D 69/02

(54) **Verfahren zur Herstellung von Reibkörpern, insbesondere von Nasslauf-Reiblamellen**
Method of manufacturing friction elements especially for wet friction plates
Procédé de fabrication d'éléments de friction en particulier pour disques de friction humide

(30) Priorität: 04.08.1999 DE 19936805
(43) Veröffentlichungstag der Anmeldung: 07.02.2001
(73) Patentinhaber: HOERBIGER Antriebstechnik GmbH, 86956 Schongau (DE)
(72) Erfinder: Gurka, Martin, Dr., 86956 Schongau (DE)
(74) Vertreter: Weber, Joachim, Dr.

(56) Entgegenhaltungen:
- EP-A- 0 415 381
- US-A- 4 770 283
- US-A- 5 612 110
- US-A- 5 622 785

## Beschreibung

Die Erfindung betrifft ein Verfahren zur Herstellung von Reibkörpern, wie insbesondere von Naßlauf-Reiblamellen gemäß Anspruch 1.

Aus der US-A-3,738,901 ist eine Kupplungsscheibe für Naßlauf (Öllauf) bekannt, die einen Reibbelag aus einer porösen, filzähnlichen Schicht aus organischen Fasern aufweist. Die Kupplungsscheibe weist ferner einen Metallträger auf, auf den der Reibbelag aufgeklebt wird. Zuvor wird bei der Herstellung derartiger organischer Reiblamellen üblicherweise zuerst ein Rohteil hergestellt, das aus dem filzartigen Material in Form eines Kreisringes oder in Form von Kreissegmenten zugeschnitten wird. Der Nachteil dieses Verfahrens ist vor allem darin zu sehen, daß mehrere Arbeitsschritte erforderlich sind und daß je nach der Teilegeometrie eine mehr oder weniger große Menge an Abfall anfällt.

Aus der EP 557 657 A1 ist ein Verfahren zur Herstellung eines Reibelementes in Verbundbauweise bekannt, bei dem zunächst eine Beschichtung aus einem pulverförmigen, aushärtbaren Klebematerial auf einem Trägerkörper aufgebracht wird. Der so beschichtete Trägerkörper wird erhitzt, um das Klebematerial fließfähig und gelartig zu machen, wobei das aushärtbare Klebematerial auf eine Temperatur erwärmt wird, die unterhalb der Aushärtetemperatur liegt, so daß das Klebematerial nicht vernetzt. Danach wird ein Reibmaterial auf zumindest eine Fläche des Trägerkörpers aufgebracht, um das Verbundelement zu bilden. Schließlich wird dieses Reibelement in Verbundbauweise, vorzugsweise unter Druckaufbringung, erwärmt, damit das Klebematerial aushärtet und so die Reibschicht am Trägerteil fest angebracht wird.

Auch dieses Verfahren ist relativ zeit- und kostenaufwendig, da mehrere Arbeitsschritte insbesondere für das aufeinanderfolgende Aufbringen des Klebematerials, dessen Vorerwärmung und das nachfolgende Aufbringen der Reibschicht und der anschließenden Aushärtung erforderlich sind.

Es ist daher Aufgabe der vorliegenden Erfindung, ein Verfahren zur Herstellung von Reibkörpern, insbesondere von Naßlauf-Reiblamellen zu schaffen, mit dem es möglich ist, in wenigen unkomplizierten Arbeitsgängen einen Reibbelag aus organischen Komponenten auf einem Trägerteil aufzubringen.

Die Lösung dieser Aufgabe erfolgt durch die Merkmale des Anspruchs 1.

Der Vorteil des erfindungsgemäßen Verfahrens ist insbesondere daran zu sehen, daß komplette Reibkörper, insbesondere Reiblamellen für Naßlauf, kostengünstig hergestellt werden können, wozu der Reibbelag direkt auf einen Stahlgrundkörper aufgebracht wird, ohne daß zuvor der Zwischenschritt der Vorbereitung eines Rohteiles erforderlich wäre. Gemäß den Prinzipien vorliegender Erfindung wird die Reibbelagmischung durch Pulversprühen, vorzugsweise durch elektrostatisches Pulversprühen, auf den zuvor geeignet vorbehandelten Stahlgrundkörper aufgesprüht. Hierbei ist bei einer besonders bevorzugten Ausführungsform vorteilhaft, daß eine gesonderte Klebstoffbeschichtung entfallen kann, da der Klebstoff zuvor der Reibbelagmischung zugegeben werden kann.

Ein weiterer Vorteil, der die Kostengünstigkeit des erfindungsgemäßen Verfahrens unterstützt, besteht darin, daß die elektrostatische Aufladung der Pulverteilchen der Reibbelagmischung deren Anhaften am Stahlgrundkörper bewirkt. Dadurch ist es möglich, die Reibbelagmischung als gleichmäßige, vorzugsweise äußerst dünne Schicht aufzutragen, die anschließend vorfixiert, vorzugsweise angeschmolzen, und somit in einen fest anhaftenden Reibbelag überführt wird. Dieser Reibbelag wird anschließend, beispielsweise in einer Heißpresse, verdichtet und egalisiert und ausgehärtet. Vorteilhafterweise erlaubt das erfindungsgemäße Verfahren die Verarbeitung von schlecht schließ- oder streufähigen, pulverigen Reibbelagmischungen aus organischen Stoffen zu gleichmäßig dünnen Schichten ohne den Zwischenschritt über ein Rohteil. Dadurch wird das Anfallen von Abfall beim Ausschneiden von Rohteilen und ein hoher Energie- und Wasserverbrauch, wie er bei bekannten Verfahren durch die Verwendung von Papiermaschinen entsteht, vermieden.

Ferner ermöglicht das erfindungsgemäße Verfahren die Beschichtung unterschiedlicher Geometrien von Reibkörpern, insbesondere von Lamellengeometrien (Belege bei Innen-/Außendurchmesser, einseitige/zweiseitige Beschichtung, unterschiedliche Ölnut-Form) ohne großen Werkzeugaufwand.

Schließlich ergibt das erfindungsgemäße Verfahren den Vorteil, die Eigenschaften des Reibbelages durch Beimischen geeigneter, pulverförmiger Zuschlagstoffe auf einfache Art und Weise zu steuern. Ferner kann vorzugsweise über ein geeignetes Treibmittel zum Beispiel ein größerer Porenraum im Reibbelag geschaffen werden, was insbesondere bei der Anwendung im Naßlauf zu besonderen vorteilhaften Eigenschaften des Reibkörpers führt.

Ein weiterer Vorteil des erfindungsgemäßen Verfahrens besteht darin, daß der Stahlgrundkörper ein billiges Zukaufteil sein kann, daß beim jeweiligen Hersteller zugeschnitten, beispielsweise gestanzt, wird.

Hierzu sind in den Unteransprüchen vorteilhafte Weiterbildungen der Erfindung angegeben.

## Patentansprüche

1. Verfahren zur Herstellung von Reibkörpern, insbesondere von Naßlauf-Reiblamellen, mit folgenden Verfahrensschritten:
- Zubereitung einer Reibbelagmischung aus organischen Komponenten;
- Vorbehandeln des Stahlgrundkörpers;
- Auftragen der Reibbelagmischung auf den Stahlgrundkörper durch Pulversprühen;
- Vorfixieren der auf den Stahlgrundkörper aufgetragenen Reibbelagmischung;
- Verdichten und Egalisieren der vorfixierten Reibbelagmischung und
- Aushärten der Reibbelagmischung;

2. Verfahren nach Anspruch 1, **dadurch gekennzeichnet, daß** die Reibbelagmischung in einer gleichmäßig dünnen Schicht von 0,3 bis 0,7 mm aufgetragen wird.

3. Verfahren nach Anspruch 1 oder 2, **dadurch gekennzeichnet, daß** das Vorfixieren der Reibbelagmischung durch ein Anschmelzen, bei einer Temperatur von 70°C bis 120°C durchgeführt wird.

4. Verfahren nach einem der Ansprüche 1 bis 3, **dadurch gekennzeichnet, daß** die Reibbelagmischung bei einer Temperatur von 150°C bis 220°C ausgehärtet wird.

5. Verfahren nach einem der Ansprüche 1 bis 4, **dadurch gekennzeichnet, daß** die Reibbelagmischung aus schlecht fließfähigen, pulverförmigen Komponenten verarbeitet werden kann.

6. Verfahren nach einem der Ansprüche 1 bis 5, **dadurch gekennzeichnet, daß** der Reibbelagmischung Zuschlagstoffe zur Beeinflussung der Eigenschaften der Reibbelagmischung zugemischt werden.

7. Verfahren nach einem der Ansprüche 1 bis 6, **dadurch gekennzeichnet, daß** der Reibbelagmischung als ein Zuschlagstoff Treibmittel zugemischt werden.

8. Verfahren nach einem der Ansprüche 1 bis 7, **dadurch gekennzeichnet, daß** der Stahlgrundkörper einseitig oder beidseitig mit einem Reibbelag versehen wird.

9. Verfahren nach einem der Ansprüche 1 bis 8, **dadurch gekennzeichnet, daß** der Reibbelagmischung Klebstoff zugegeben wird.

10. Verfahren nach einem der Ansprüche 1 bis 9, **dadurch gekennzeichnet, daß** das Auftragen der Reibbelagmischung auf den Stahlgrundkörper durch elektrostatisches Pulversprühen erfolgt.

11. Verfahren nach einem der Ansprüche 1 bis 10, **dadurch gekennzeichnet, daß** das Verdichten und Egalisieren der Reibbelagmischung durch Glattpressen erfolgt.

## Claims

1. Method of producing friction elements, in particular wet-running friction discs, comprising the following steps:
- preparing a friction lining mixture from organic components;
- pre-treating the steel body;
- applying the friction lining mixture to the steel body by powder spraying;
- pre-fixing the friction lining mixture applied to the steel body;
- compacting and levelling the pre-fixed friction lining mixture, and
- hardening the friction lining mixture.

2. Method according to claim 1, **characterised in that** the friction lining mixture is applied in a uniformly thin layer of 0.3 to 0.7 mm.

3. Method according to claim 1 or claim 2, **characterised in that** the friction lining mixture is pre-fixed by fusion at a temperature of 70°C to 120°C.

4. Method according to one of claims 1 to 3, **characterised in that** the friction lining mixture is hardened at a temperature of 150°C to 220°C.

5. Method according to one of claims 1 to 4, **characterised in that** the friction lining mixture can be worked up from pulverulent components having low fusibility.

6. Method according to one of claims 1 to 5, **characterised in that** additives are added to the friction lining mixture in order to influence the properties of the friction lining mixture.

7. Method according to one of claims 1 to 6, **characterised in that** a propellant is added to the friction lining mixture as an additive.

8. Method according to one of claims 1 to 7, **characterised in that** the steel body is provided on one or both sides with a friction lining.

9. Method according to one of claims 1 to 8, **characterised in that** adhesive is added to the friction lining mixture.

10. Method according to one of claims 1 to 9, **characterised in that** the friction lining mixture is applied to the steel body by electrostatic powder spraying.

11. Method according to one of claims 1 to 10, **characterised in that** the friction lining mixture is compacted and levelled by pressing.

## Revendications

1. Procédé de fabrication d'éléments de friction, en particulier pour disques de friction humide, présentant les étapes opératoires suivantes :
- préparation d'un mélange pour revêtement de friction à partir de composants organiques ;
- traitement préalable du corps de base en acier ;
- application sur le corps de base en acier du mélange pour revêtement de friction par pulvérisation ;
- fixation préalable du mélange pour revêtement de friction déposé sur le corps de base en acier ;
- compactage et égalisation du mélange de revêtement de friction préfixé ; et
- durcissement du mélange pour revêtement de friction.

2. Procédé selon la revendication 1, **caractérisé en ce que** le mélange pour revêtement de friction est déposé en une mince couche régulière de 0,3 à 0,7 mm.

3. Procédé selon la revendication 1 ou 2, **caractérisé en ce que** la fixation préalable du mélange pour revêtement de friction se fait par fusion à une température comprise entre 70 °C et 120 °C.

4. Procédé selon l'une des revendications 1 à 3, **caractérisé en ce que** le mélange pour revêtement de friction est durci à une température comprise entre 150 °C et 220 °C.

5. Procédé selon l'une des revendications 1 à 4, **caractérisé en ce que** le mélange pour revêtement de friction peut être travaillé ou réalisé à partir de composants pulvérulents s'écoulant difficilement librement.

6. Procédé selon l'une des revendications 1 à 5, **caractérisé en ce que** l'on ajoute au mélange pour revêtement de friction des additifs destinés à influencer les propriétés du mélange pour revêtement de friction.

7. Procédé selon l'une des revendications 1 à 6, **caractérisé en ce que** l'on ajoute au mélange pour revêtement de friction un agent porogène en guise d'additif.

8. Procédé selon l'une des revendications 1 à 7, **caractérisé en ce que** le corps de base en acier est pourvu d'un revêtement de friction d'un côté ou des deux côtés.

9. Procédé selon l'une des revendications 1 à 8, **caractérisé en ce qu'**un adhésif est incorporé au mélange pour revêtement de friction.

10. Procédé selon l'une des revendications 1 à 9, **caractérisé en ce que** l'application du mélange pour revêtement de friction sur le corps de base en acier s'effectue par pulvérisation électrostatique.

11. Procédé selon l'une des revendications 1 à 10, **caractérisé en ce que** le compactage et l'égalisation du mélange pour revêtement de friction s'effectuent dans une presse à égaliser.
